# EUROPÄISCHE PATENTSCHRIFT

(11) **EP 1 668 877 B1**
(45) Veröffentlichungstag und Bekanntmachung des Hinweises auf die Patenterteilung: **05.10.2011**
(21) Anmeldenummer: 04725383.6
(22) Anmeldetag: 02.04.2004
(51) Int. Cl.: H04M 1/725, H04M 1/727, H04B 1/16

(54) **VERFAHREN ZUR VERRINGERUNG EINER STRAHLUNG IN EINEM FUNK-TELEKOMMUNIKATIONSSYSTEM SOWIE ZUGEHÖRIGE BASISSTATION UND ZUGEHÖRIGES MOBILES ENDGERÄT**
METHOD FOR REDUCING RADIATION IN A RADIO TELECOMMUNICATIONS SYSTEM, CORRESPONDING BASE STATION AND MOBILE TERMINAL
PROCEDE POUR REDUIRE UN RAYONNEMENT DANS UN SYSTEME DE TELECOMMUNICATION PAR RADIO, AINSI QUE STATION DE BASE CORRESPONDANTE ET TERMINAL MOBILE CORRESPONDANT

(30) Priorität: 30.09.2003 DE 10345529
(43) Veröffentlichungstag der Anmeldung: 14.06.2006
(73) Patentinhaber: Gigaset Communications GmbH, 81379 München (DE)
(72) Erfinder: EUSCHER, Christoph, 46414 Rhede (DE)
(74) Vertreter: Michalski Hüttermann & Partner Patentanwälte
(86) Internationale Anmeldenummer: PCT/EP2004/050422
(87) Internationale Veröffentlichungsnummer: WO 2005/034489

(56) Entgegenhaltungen:
- DE-A- 19 927 585
- US-A- 3 688 195
- US-A- 5 086 452
- US-A- 5 627 882
- US-B1- 6 198 926

## Beschreibung

Die vorliegende Erfindung bezieht sich auf ein Verfahren zur Verringerung einer Strahlung in einem Funk-Telekommunikationssystem sowie eine zugehörige Basisstation und ein zugehöriges mobiles Endgerät und insbesondere auf ein DECT-Telekommunikationssystem mit reduzierter Strahlung.

Aus der Druckschrift DE 199 27 585 A1 ist ein Funk-Telekommunikationssystem bekannt, bei dem zur Verringerung einer Strahlung die Basisstation in einen Ruhebetriebszustand versetzt wird, wobei ein Funk-Synchronisationssignal nicht ausgesendet wird, sofern ein Sensor eine Anwesenheit eines mobilen Endgerätes in der Basisstation erfasst, wobei sie vom Ruhebetriebszustand unmittelbar in einen Normalbetriebszustand übergeht, sobald ein externer Anruf eintrifft. Auf diese Weise kann das für die Synchronisation zwischen der Basisstation und dem mobilen Endgerät notwendige Funk-Synchronisationssignal auf ein minimales Maß beschränkt werden, wodurch sich eine Strahlung bzw. ein sogenannter "Elektrosmog" verringert. Nachteilig ist hierbei jedoch, dass ein derartiges System nur für Telekommunikationssysteme geeignet ist, die genau eine Basisstation und ein mobiles Endgerät aufweisen.

Grundsätzlich können jedoch in derartigen Funk-Telekommunikationssystemen eine Vielzahl von mobilen Endgeräten angemeldet und betrieben werden, wobei die zusätzlichen mobilen Endgeräte üblicherweise lediglich eine Ladeschale aufweisen und an einem bereits existierenden Telekommunikationssystem bzw. an einer bereits vorliegenden Basisstation angemeldet werden können.

Der Erfindung liegt daher die Aufgabe zugrunde, ein verbessertes Verfahren zur Verringerung einer Strahlung in einem Funk-Telekommunikationssystem sowie eine zugehörige Basisstation und ein zugehöriges mobiles Endgerät zu schaffen.

Erfindungsgemäß wird diese Aufgabe hinsichtlich des Verfahrens durch die Maßnahmen des Patentanspruchs 1, hinsichtlich der Basisstation durch die Merkmale des Patentanspruchs 15 und hinsichtlich des mobilen Endgerätes durch die Merkmale des Patentanspruchs 24 gelöst.

Insbesondere durch das Erfassen einer Anzahl von an der Basisstation angemeldeten mobilen Endgeräten, dem Setzen bzw. Festlegen einer Anzahl von virtuellen Dauerempfang-Statusinformationen, die einen tatsächlichen oder scheinbaren Dauerempfangszustand der mobilen Endgeräte signalisieren, und dem Vergleichen der Anzahl von angemeldeten Endgeräten mit der Anzahl von virtuellen Dauerempfang-Statusinformationen, wobei die Basisstation in einen Ruhebetriebszustand geschaltet wird, bei dem auch das Funk-Synchronisationssignal nicht gesendet wird, wenn beim Vergleich eine gleiche Anzahl ermittelt wird, und ansonsten die Basisstation in einem Normalbetriebszustand verbleibt, bei dem zumindest das Funk-Synchronisationssignal gesendet wird, kann in Abhängigkeit von einer jeweiligen Zustandsinformation eine Strahlung bzw. "Elektrosmog" ohne Einschränkung einer Funktionalität zuverlässig verringert werden.

Vorzugsweise wird die virtuelle Dauerempfang-Statusinformation von einem jeweils angemeldeten mobilen Endgerät in Abhängigkeit von seiner Energieversorgung festgelegt bzw. gesetzt. Auf diese Weise kann beispielsweise nur bei Ablegen eines mobilen Endgeräts in einer Ladeschale eine jeweilige virtuelle Dauerempfang-Statusinformation abgesendet und das Endgerät in einen energieintensiven tatsächlichen Dauerempfang-Zustand gebracht werden. Sobald alle mobilen Endgeräte einen derartigen Zustand signalisieren, kann nunmehr auch die zugehörige Basisstation das üblicherweise immer notwendige Funk-Synchronisationssignal abschalten, wodurch man völlige Funkstille im Funk-Telekommunikationssystem erhält.

Darüber hinaus können die virtuellen Dauerempfang-Statusinformationen auch in Abhängigkeit von einer Benutzereingabe und unabhängig von einem tatsächlichen Zustand der mobilen Endgeräte festgelegt werden, wodurch sich ohne Rücksicht auf einen jeweiligen Energieverbrauch in dem mobilen Endgerät eine reduzierte Strahlung im Funk-Telekommunikationssystem realisieren lässt.

Ferner kann die virtuelle Dauerempfang-Statusinformation auch in Abhängigkeit von einer Zeitgebereinheit festgelegt werden, wodurch beispielsweise in Abhängigkeit von einer Tageszeit die Statusinformationen derart eingestellt werden, dass absolute Funkstille bzw. eine Reduzierung der Strahlung im Telekommunikationssystem eintritt.

Obwohl ein tatsächlicher Zustand der mobilen Endgeräte durch die festgelegten bzw. gesetzten virtuellen Dauerempfang-Statusinformationen grundsätzlich nicht definiert ist, kann dieser tatsächliche Zustand selbstverständlich auch abhängig von der festgelegten virtuellen Dauerempfang-Statusinformation aktiviert werden. Auf diese Weise kann beispielsweise eine Basisstation auch einen tatsächlichen oder scheinbaren Dauerempfang-Zustand für ein mobiles Endgerät ferngesteuert festlegen.

Obwohl die Benutzereingabe und die Zeitgebereinheit vorzugsweise auf Seiten der Basisstation realisiert werden, kann eine entsprechende Eingabe- und/oder Zeitgebereinheit auch in einem der mobilen Endgeräte realisiert sein.

Ferner kann der Betriebszustand der Basisstation an den mobilen Endgeräten und/oder an der Basisstation angezeigt werden, wodurch beispielsweise Funkstille angezeigt und bei fehlender Anzeige beispielsweise ein verursachendes mobiles Endgerät in einen entsprechenden Zustand versetzt werden kann.

Vorzugsweise wird im Ruhebetriebszustand der Empfänger der Basisstation auf Dauerempfang geschaltet, wodurch ein Aktivieren eines Normalbetriebszustandes aus dem Ruhebetriebszustand über eine endgeräteseitige Verbindungsanforderung von Seiten der mobilen Endgeräte möglich ist. Darüber hinaus kann dieses Aktivieren des Normalbetriebszustandes selbstverständlich auch über eine vermittlungsseitige Verbindungsanforderung erfolgen.

Vorzugsweise erfolgt im Ruhebetriebszustand eine Synchronisation der Basisstation mit den mobilen Endgeräten über ein drahtgebundenes Synchronisationssignal, wie beispielsweise einer Netzfrequenz einer gemeinsamen Netzversorgung, wodurch sich ein Stromverbrauch weiter verringern lässt und ein Verbindungsaufbau beschleunigt wird.

Obwohl die virtuellen Statusinformationen vorzugsweise über die Funkschnittstelle des Telekommunikationssystems zwischen der Basisstation und den mobilen Endgeräten übertragen werden, kann darüber hinaus eine Zusatz-Schnittstelle zwischen der Basisstation und den mobilen Endgeräten vorhanden sein, die eine Übertragung der Statusinformationen auf dieser Zusatz-Schnittstelle ermöglicht. Auf diese Weise können beispielsweise über Infrarot, Bluetooth, Powerline usw. entsprechende Informationen übertragen werden.

Zum weiteren Reduzieren einer Aktivierungszeit kann vorzugsweise nach dem Aktivieren des Normalbetriebszustandes das Funk-Synchronisationssignal auf der zuletzt verwendeten Frequenz gesendet werden.

Hinsichtlich der Basisstation wird vorzugsweise eine Sendeeinheit zum Senden von zumindest einem Funk-Synchronisationssignal, eine Empfangseinheit zum Empfangen von Daten auf der Funkschnittstelle und eine Steuereinheit zum Steuern der Sende- und Empfangseinheit verwendet, wobei eine Speichereinheit eine Anzahl von an der Basisstation angemeldeten mobilen Endgeräten sowie eine Anzahl von virtuellen Dauerempfang-Statusinformationen speichert und die Steuereinheit die Basisstation in einen Ruhebetriebszustand steuert, bei dem auch das Funk-Synchronisationssignal nicht gesendet wird, wenn gemäß einer Auswertung der Speichereinheit die Anzahl der angemeldeten Endgeräte gleich der Anzahl der virtuellen Dauerempfang-Statusinformationen ist. Auf diese Weise erhält man eine Basisstation, die auch bei Verwaltung von zumindest einem angemeldeten mobilen Endgerät seine Strahlung konditional verringern kann.

Hinsichtlich des mobilen Endgerätes werden vorzugsweise eine Sendeeinheit zum Senden von Daten, eine Empfangseinheit zum Empfangen von Daten und eine Steuereinheit zum Steuern der Sende- und Empfangseinheit verwendet, wobei eine Statusinformation-Bestimmungseinheit eine virtuelle Dauerempfang-Statusinformation festlegt bzw. setzt und die Steuereinheit bei Vorliegen einer virtuellen Dauerempfang-Statusinformation diese über die Sendeeinheit sendet und die Empfangseinheit auf tatsächlichen Dauerempfang schaltet oder in einen Bereitschaftszustand hierfür. Da sich die Empfangseinheit in einem Betriebsmodus Dauerempfang befindet, kann das Funk-Synchronisationssignal im Telekommunikationssystem abgeschaltet und somit völlige Funkstille realisiert werden, wobei weiterhin die Möglichkeit der Aktivierung der mobilen Endgeräte aufgrund ihrer tatsächlichen Dauerempfangsbereitschaft besteht. Da diese Dauerempfangsbereitschaft in der Regel einen hohen Energiebedarf aufweist, wird eine derartige virtuelle Dauerempfang-Statusinformation in der Regel in Abhängigkeit von einer Energieversorgung und insbesondere bei Vorliegen einer externen Energieversorgung gesetzt.

In den weiteren Unteransprüchen sind weitere vorteilhafte Ausgestaltungen der Erfindung gekennzeichnet.

Die Erfindung wird nachstehend an Hand eines Ausführungsbeispiels unter Bezugnahme auf die Zeichnung näher beschrieben.

Es zeigen:
- Figur 1: ein vereinfachtes Flussdiagramm zur Veranschauli- chung wesentlicher Schritte des Verfahrens zur Ver- ringerung einer Strahlung in einem Funk-Telekommu- nikationssystem;
- Figur 2: eine vereinfachte Blockdarstellung des erfindungs- gemäßen Funk-Telekommunikationssystems; und
- Figur 3: eine vereinfachte Blockdarstellung eines erfin- dungsgemäßen mobilen Endgerätes des Funk-Telekommu- nikationssystems gemäß Figur 2.

Die vorliegende Erfindung wird nachfolgend an Hand eines Funk-Telekommunikationssystems nach dem DECT-Standard beschrieben.

In einem derartigen DECT-Telekommunikationssystem können ein mobiles Endgerät oder eine Vielzahl von mobilen Endgeräten, wie beispielsweise schnurlosen bzw. drahtlosen Telefonen, über eine oder eine Vielzahl von Basisstationen bedient werden. Hierbei werden zumindest ein Kanal dem zumindest einen angemeldeten mobilen Endgerät zur Verfügung gestellt, wodurch beispielsweise eine Datenübertragung und insbesondere die Übertragung von Sprachdaten ermöglicht ist.

Damit ein mobiles Endgerät mit der Basisstation kommunizieren und beispielsweise eine Rufnummer übertragen kann, um einen Anruf einzuleiten, ist ein Funk-Synchronisationssignal bzw. ein sogenannter (Dummy-)Bearer erforderlich. In einem Normalbetriebszustand, bei dem zumindest dieses Funk-Synchronisationssignal gesendet wird, liegt demzufolge weiterhin eine gewisse Strahlung im Telekommunikationssystem vor, obwohl eigentlich keine Datenübertragung zwischen der Basisstation und den mobilen Endgeräten erfolgt.

Zur Verringerung dieser Minimalstrahlung bzw. des Funk-Synchronisationssignals wird daher nachfolgendes Verfahren vorgeschlagen.

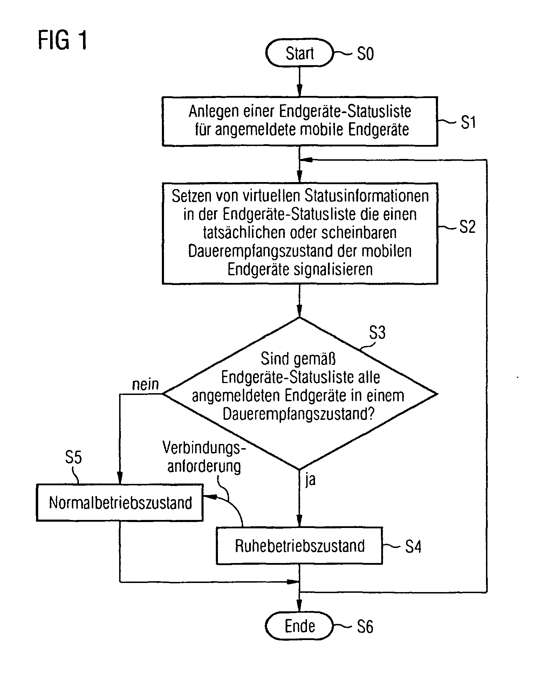

Figur 1 zeigt eine vereinfachte Darstellung eines Flussdiagramms zur Veranschaulichung wesentlicher Schritte eines Verfahrens zur Verringerung einer Strahlung in einem Funk-Telekommunikationssystem, wie beispielsweise einem DECT-System, welches zumindest ein Funk-Synchronisationssignal, wie beispielsweise einen (Dummy-)Bearer, zum Synchronisieren einer Basisstation mit zumindest einem mobilen Endgerät ausstrahlt.

Nach einem Start in Schritt S0 wird in einem Schritt S1 zunächst eine Anzahl von an der Basisstation angemeldeten mobilen Endgeräten erfasst. Unter einer Anmeldung an der Basisstation wird nachfolgend sowohl ein kurzzeitiges Assoziieren (association), wie z.B. in WLAN-Systemen (Wireless Local Area Network), als auch ein langzeitiges Eintragen (subscription), wie z.B. in DECT-Systemen (Digital European Cordless Communication) an der Basisstation verstanden.

Vorzugsweise wird hierbei eine Endgeräte-Statusliste für alle angemeldeten mobilen Endgeräte angelegt, in die verschiedene Zustandsinformationen und insbesondere ein sogenannter virtueller Dauerempfangszustand bzw. eine virtuelle Dauerempfang-Statusinformation eingetragen werden kann, die entweder einen tatsächlichen Dauerempfangszustand oder einen scheinbaren Dauerempfangszustand anzeigt bzw. signalisiert. Insbesondere im scheinbaren Dauerempfangszustand befindet sich das Endgerät nicht wirklich in einem Dauerempfangszustand sondern täuscht diesen nur vor oder befindet sich in einem vorbereitenden Bereitschaftszustand.

In einem Schritt S2 werden anschließend eine Anzahl von virtuellen Dauerempfang-Statusinformationen festgelegt bzw. gesetzt, die den tatsächlichen oder scheinbaren Dauerempfangszustand von jeweiligen mobilen Endgeräten anzeigen bzw. signalisieren. Nach diesem Festlegen bzw. Setzen der virtuellen Dauerempfang-Statusinformationen in der Endgeräte-Statusliste gemäß Schritt S2 wird in einem Schritt S3 ein Vergleich der Anzahl von angemeldeten Endgeräten mit der Anzahl von virtuellen Dauerempfang-Statusinformationen durchgeführt. Genauer gesagt wird überprüft, ob gemäß dieser Endgerät-Statusliste alle angemeldeten Endgeräte einen tatsächlichen oder scheinbaren Dauerempfangszustand signalisieren oder bereit sind in einen Dauerempfangszustand zu wechseln und folglich nur auf ein vorbestimmtes beispielsweise Wake-up-Signal warten.

Wird bei diesem Vergleich gemäß Schritt S3 festgestellt, dass eine gleiche Anzahl von angemeldeten Endgeräten und virtuellen Dauerempfang-Statusinformationen vorliegt und demzufolge beispielsweise alle angemeldeten Endgeräte tatsächlich einen Dauerempfangszustand aufweisen, so kann in einem Schritt S4 die Basisstation in einen Ruhebetriebszustand geschaltet werden, bei dem auch das Funk-Synchronisationssignal bzw. der (Dummy-)Bearer nicht mehr gesendet wird. Sollte bei der Überprüfung gemäß Schritt S3 keine übereinstimmende Anzahl festgestellt werden, bzw. sich nicht alle mobilen Endgeräte in einem Dauerempfangszustand gemäß der Endgeräte-Statusliste befinden, so verbleibt die Basisstation in ihrem Normalbetriebszustand gemäß Schritt S5, bei dem zumindest das Funk-Synchronisationssignal weiterhin gesendet wird und darüber hinaus selbstverständlich auch eine Datenübertragung stattfinden kann. Das Programm endet in einem Schritt S6, wobei vorzugsweise nach dem Schritt S4 bzw. S5 wieder vor den Schritt S2 verzweigt werden kann, um ein zyklisches Festlegen bzw. Setzen der virtuellen Statusinformationen und eine nachfolgende Überprüfung zu ermöglichen.

Auf diese Weise kann der z.B. bei DECT-Systemen in regelmäßigen Zyklen (z.B. 160 ms) gesendete (Dummy-)Bearer abgeschaltet werden, wodurch zwar ein Strombedarf in den mobilen Endgeräten aufgrund ihres Dauerempfangszustandes erhöht wird, jedoch eine Strahlung im Funk-Telekommunikationssystem zuverlässig verringert wird.

Gemäß Figur 1 wird das Festlegen der virtuellen Dauerempfang-Statusinformationen in Schritt S2 vorzugsweise von einem angemeldeten bzw. assoziierten mobilen Endgerät festgelegt, wobei vorzugsweise die virtuelle Dauerempfang-Statusinformation in Abhängigkeit von einer Energieversorgung und insbesondere von einem Ladestrom eines Akkus festgelegt wird. Auf diese weise führt der im tatsächlichen Dauerempfangszustand erhöhte Energiebedarf in den mobilen Endgeräten zu keinerlei Problemen, wodurch die Standby-Zeiten der mobilen Endgeräte unverändert gleich bleiben.

Darüber hinaus können die virtuellen Dauerempfang-Statusinformationen gemäß Schritt S2 jedoch auch in Abhängigkeit von einer Benutzereingabe entweder direkt an der Basisstation oder indirekt über die mobilen Endgeräte bzw. deren zugehörige Ladeschalen gesetzt bzw. festgelegt werden, wodurch man eine flexible Einstellbarkeit des Telekommunikationssystems erhält und beispielsweise auch ältere mobile Endgeräte (d.h. frühere Produktgenerationen) in ein derartiges Telekommunikationssystem integriert werden können, ohne die Fähigkeit zur Realisierung einer Funkstille zu beeinträchtigen. Insbesondere bei derartigen Endgeräten wird die virtuelle Dauerempfang-Statusinformation unabhängig von einem tatsächlichen Dauerempfangszustand des Endgerätes in der Basisstation festgelegt.

Obwohl demzufolge üblicherweise ein tatsächlicher Zustand der mobilen Endgeräte der festgelegten Dauerempfang-Statusinformation entspricht, kann demzufolge ein derartiger Zustand den mobilen Endgeräten auch dann zugeordnet werden, wenn diese eine derartige Funktionalität nicht aufweisen und demzufolge gewisse Funktionseinbußen in Kauf genommen werden.

In diesem Zusammenhang kann beim Festlegen der virtuellen Dauerempfang-Statusinformationen beispielsweise auch eine Basisstation einen tatsächlichen Zustand eines mobilen Endgerätes zentral festlegen, wodurch sich eine vereinfachte Bedienbarkeit ergibt.

Obwohl die virtuellen Dauerempfang-Statusinformationen im Schritt S2 vorzugsweise in Abhängigkeit von einer Energieversorgung des mobilen Endgerätes oder einer Benutzereingabe festgelegt werden, können darüber hinaus diese Dauerempfang-Statusinformationen auch in Abhängigkeit von einer Zeitgebereinheit festgelegt werden. Diese Zeitgebereinheit kann sich hierbei sowohl in der Basisstation als auch in einem mobilen Endgerät oder einer zugehörigen Ladeschale befinden. Auf diese Weise können insbesondere bei programmierbaren Zeitgebereinheiten sogenannte Tages- und Nacht-Funkstillzeiten realisiert werden, wonach beispielsweise während der Nacht eine "bedingungslose" Funkstille eingestellt werden kann.

Darüber hinaus können sowohl die Basisstation als auch die mobilen Endgeräte eine Möglichkeit zur Anzeige der Betriebszustände gemäß der Schritte S4 und S5 aufweisen, wodurch einem Benutzer ein aktueller Zustand der Strahlung im Telekommunikationssystem optisch, akustisch oder in sonstiger Form angezeigt werden kann.

Befindet sich die Basisstation in einem Ruhebetriebszustand gemäß Schritt S4, so wird vorzugsweise ein Empfänger der Basisstation auf Dauerempfang geschaltet, um beispielsweise eine endgeräteseitige Verbindungsanforderung, d.h. eine Verbindungsanforderung von den mobilen Endgeräten, zu erfassen, und daraufhin in einen Normalbetriebszustand zu schalten. Andererseits kann dieser Übergang vom Ruhebetriebszustand in Schritt S4 zum Normalbetriebszustand gemäß Schritt S5 auch durch eine vermittlungsseitige Verbindungsanforderung realisiert werden, wobei beispielsweise ein amtsseitiger Ruf die Herstellung eines Datenübertragungskanals zu einem mobilen Endgerät erfordert.

Zur Verringerung eines Energiebedarfs insbesondere aufgrund des Dauerempfangszustandes in der Basisstation und der mobilen Endgeräte während des Ruhebetriebszustandes im Schritt S4 kann in diesem Schritt eine Synchronisation der Basisstation mit der Vielzahl von mobilen Endgeräten auch mittels eines drahtgebundenen Synchronisationssignals erfolgen, wobei insbesondere die Wechselfrequenz einer Netzversorgung ein entsprechendes Synchronisationssignal liefern kann und die "Dauerempfangszeiten" der Empfangseinheiten zur Verringerung eines Energiebedarfs entsprechend verringert. Sofern demzufolge alle mobilen Endgeräte beispielsweise über eine Ladeschale ein entsprechendes drahtgebundenes Synchronisationssignal ableiten können, kann das Funk-Synchronisationssignal auch generell abgeschaltet werden. Insbesondere ein Verbindungsaufbau zwischen den mobilen Endgeräten und der Basisstation kann dadurch wesentlich beschleunigt werden.

Obwohl die Schritte S1 bis S3 üblicherweise unmittelbar in der Basisstation durchgeführt werden und lediglich der Schritt S2 in den mobilen Endgeräten realisiert wird und unter Verwendung der Funkschnittstelle die festgelegten Statusinformationen übertragen werden, kann zusätzlich zur vorhandenen Funkschnittstelle eine Zusatz-Schnittstelle in Form von beispielsweise einer Bluetooth-, einer Infrarot-, einer Powerline-Schnittstelle zum Übertragen der Statusinformationen von den mobilen Endgeräten bzw. den zugehörigen Ladeschalen zu der Basisstation realisiert werden.

Insbesondere beim Übergang vom Ruhebetriebszustand gemäß Schritt S4 in den Normalbetriebszustand gemäß Schritt S5 durch eine Verbindungsanforderung kann das Funk-Synchroni sationssignal zunächst auf der zuletzt verwendeten Frequenz gesendet werden, wodurch man eine weitere Beschleunigung für einen Verbindungsaufbau erhält.

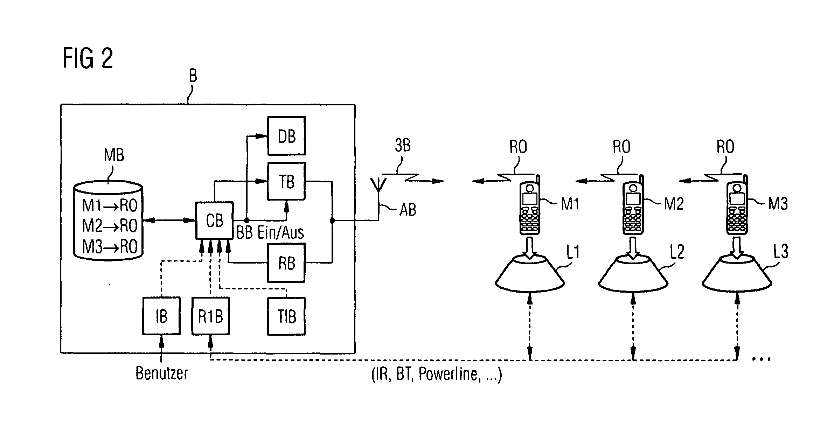

Figur 2 zeigt eine vereinfachte Blockdarstellung zur Veranschaulichung eines Funk-Telekommunikationsnetzsystems, wie es beispielsweise im DECT-Standard vorliegt.

Gemäß Figur 2 sind an einer Basisstation B eine Vielzahl von mobilen Endgeräten M1, M2 und M3 angemeldet, die beispielsweise jeweils über eine Ladeschale L1 bis L3 verfügen. In einem Normalbetriebszustand sendet die Antenne AB der Basisstation B in gleichmäßigen Abständen den sogenannten (Dummy-) Bearer BB als Funk-Synchronisationssignal ab, wodurch den mobilen Endgeräten M1 bis M3 ermöglicht ist, stromsparend und in synchronem Zyklus nur kurzzeitig ihre Empfänger einzuschalten, um aktuelle Systemzustände, wie z.B. eingehende Rufe, zu erhalten.

Die Basisstation B weist hierbei eine Sendeeinheit TB zum Senden von zumindest dem Funk-Synchronisationssignal BB über die DECT-Funkschnittstelle auf, wobei eine Empfangseinheit RB jeweilige Daten auf dieser Funkschnittstelle empfängt. Eine Steuereinheit CB steuert im Wesentlichen die Abläufe der Basisstation B und insbesondere die Sende- und Empfangseinheit TB und RB.

Zur Realisierung der vorstehend beschriebenen "Funkstille-Fähigkeit" weist die Basisstation B ferner eine Speichereinheit MB zum Speichern einer Anzahl von an der Basisstation B angemeldeten mobilen Endgeräten M1 bis M3 sowie einer Anzahl von virtuellen Dauerempfang-Statusinformationen RO (Receiver Open) auf, die einen tatsächlichen oder scheinbaren Dauerempfangszustand der mobilen Endgeräte anzeigen bzw. signalisieren. Die Steuereinheit CB wertet hierbei die Speichereinheit MB hinsichtlich der Anzahl der angemeldeten Endgeräte und der Anzahl der vorliegenden virtuellen Dauerempfang-Statusinfor mationen dahingehend aus, dass bei Vorliegen einer gleichen Anzahl angemeldeter Endgeräte und Dauerempfang-Statusinformationen die Basisstation B in einen Ruhebetriebszustand gesteuert wird, bei dem auch das Funk-Synchronisationssignal BB nicht mehr gesendet wird. Beispielsweise steuert die Steuereinheit CB unmittelbar die Sendeeinheit TB dahingehend an, dass die Sendeeinheit jegliches Senden von Daten verhindert.

Auf diese Weise kann eine Strahlung im Telekommunikationssystem und insbesondere das Ausstrahlen des Funk-Synchronisationssignals bzw. des (Dummy-)Bearer BB immer dann verhindert werden, wenn beispielsweise alle mobilen Endgeräte in ihre Ladeschalen L1 bis L3 zurückgelegt werden und folglich keine Kommunikation stattfindet. In diesem Fall erzeugt jedes der mobilen Endgeräte M1 bis M3 eine jeweilige virtuelle Dauerempfang-Statusinformation RO, welche vorzugsweise über die DECT-Funkschnittstelle an die Basisstation B übermittelt und dort im Speicher MB abgelegt wird. Sobald die Anzahl der angemeldeten mobilen Endgeräte mit der Anzahl der eingetragenen virtuellen Dauerempfang-Statusinformationen übereinstimmt, geht die Basisstation davon aus, dass alle mobilen Endgeräte in ihre Ladeschalen abgelegt wurden und ein entsprechender energieintensiver Dauerempfangszustand aktiviert wurde, weshalb sie nunmehr das Funk-Synchronisationssignal BB abschaltet.

Obwohl die virtuellen Dauerempfang-Statusinformationen RO folglich vorzugsweise von den mobilen Endgeräten M1 bis M3 bzw. ihren zugehörigen Ladeschalen L1 bis L3 festgelegt und an die Basisstation übertragen werden, kann die Basisstation B auch eine Benutzer-Eingabeeinheit IB aufweisen, mit der die virtuelle Dauerempfang-Statusinformation RO von einem Benutzer abhängig oder unabhängig von einem tatsächlichen Zustand der zugehörigen mobilen Endgeräte eingebbar ist. Genauer gesagt kann ein Benutzer demzufolge auch die in der Speichereinheit MB vorzugsweise als Statusliste abgelegte Zuordnung der angemeldeten Endgeräte und ihrer virtuellen Dauer empfang-Statusinformationen eingeben bzw. modifizieren. Insbesondere bei Verwendung von alten oder nicht-systemkompatiblen mobilen Endgeräten bzw. zugehöriger Ladeschalen können derartige Geräte demzufolge vom Benutzer voreingestellt werden, wodurch eine grundsätzliche Funktionalität des Systems weiterhin gewährleistet ist.

Ferner kann die Basisstation B eine Zeitgebereinheit TI aufweisen, mit der eine vorgegebene virtuelle Dauerempfang-Statusinformation in Abhängigkeit von beispielsweise einer Tageszeit erzeugt wird. Vorzugsweise ist diese Zeitgebereinheit zusätzlich von einem Benutzer programmierbar, wodurch man bestimmte Tageszeiten, wie beispielsweise eine Nacht als Funkstille-Zeit definieren kann.

Darüber hinaus kann die Basisstation B eine Anzeigeeinheit DB zum Anzeigen eines jeweiligen Betriebszustandes der Basisstation aufweisen, wodurch ein jeweiliger Benutzer jederzeit einen Normalbetriebszustand von einem Ruhebetriebszustand unterscheiden kann und insbesondere nicht im Dauerempfangszustand befindliche Endgeräte erfasst werden können.

Obwohl die virtuellen Dauerempfang-Statusinformationen RO vorzugsweise über die zur Verfügung gestellte Funkschnittstelle übertragen werden, kann die Basisstation darüber hinaus eine Zusatz-Empfangseinheit R1B aufweisen, die das Empfangen der Statusinformationen über beispielsweise eine Infrarot-Schnittstelle IR, eine Bluetooth-Schnittstelle BT oder eine Powerline-Schnittstelle ermöglichen.

Ferner kann über diese Schnittstelle beispielsweise auch eine Netzfrequenz (50 Hz) abgeleitet werden, wodurch eine Synchronisation der Basisstation B mit der Vielzahl von mobilen Endgeräten M1 bis M3 mittels eines drahtgebundenen Synchronisationssignals realisiert werden kann.

Zur Reaktivierung eines Normalbetriebszustandes über die vorgegebene Funkschnittstelle kann die Steuereinheit CB die Empfangseinheit RB der Basisstation im Ruhebetriebszustand auf Dauerempfang schalten, wodurch eine Verbindungsanforderung von Seiten der mobilen Endgeräte bzw. endgeräteseitig beispielsweise über ein MAC-Setup-Signal (MAC, Media Access Control) ermöglicht ist.

In gleicher Weise besteht selbstverständlich auch die Möglichkeit, dass die Steuereinheit CB die Basisstation in einen Normalbetriebszustand schaltet, bei dem zumindest das Funk-Synchronisationssignal bzw. der (Dummy-)Bearer BB gesendet wird, wenn eine vermittlungsseitige Verbindungsanforderung vorliegt.

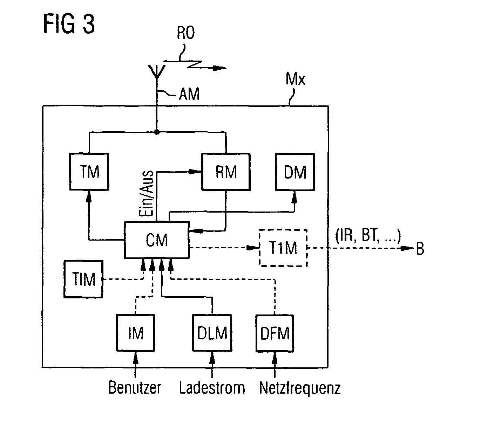

Figur 3 zeigt eine vereinfachte Blockdarstellung eines mobilen Endgerätes des Telekommunikationssystems gemäß Figur 2, wobei gleiche Bezugszeichen gleiche oder entsprechende Elemente bezeichnen und auf eine wiederholte Beschreibung nachfolgend verzichtet wird.

Gemäß Figur 3 weist ein erfindungsgemäßes mobiles Endgerät Mx eine Sendeeinheit TM zum Senden von Daten auf einer Funkschnittstelle sowie eine Empfangseinheit RM zum Empfangen von Daten auf der Funkschnittstelle auf, wobei eine Steuereinheit CM die Sende- und Empfangseinheit sowie die Funktionen des mobilen Endgerätes Mx steuert. Zum Festlegen einer virtuellen Dauerempfang-Statusinformation RO weist das mobile Endgerät eine Statusinformation-Bestimmungseinheit auf, die beispielsweise eine Benutzereingabeeinheit IM, eine Energieerfassungseinheit DLM und/oder eine Zeitgebereinheit TIM aufweisen kann. Bei Vorliegen bzw. bei Erfassen einer festgelegten virtuellen Dauerempfang-Statusinformation durch die Steuereinheit CM wird diese virtuelle Dauerempfang-Statusinformation RO über die Sendeeinheit TM bzw. eine zugehörige Antenne AM gesendet und die Empfangseinheit RM beispielsweise in einen tatsächlichen Dauerempfangszustand gebracht.

Da ein derartiger Dauerempfangszustand im mobilen Endgerät einen erhöhten Energiebedarf bedeutet, weist die Statusinformations-Bestimmungseinheit vorzugsweise eine Energieversorgungs-Erfassungseinheit DLM auf, die eine virtuelle Dauerempfang-Statusinformation nur dann erzeugt bzw. festlegt, wenn die Energieversorgung über eine externe Energieversorgung erfolgt. Beispielsweise wird hierfür ein Ladestrom für einen nicht dargestellten Akku bzw. Energiespeichereinheit ausgewertet, wodurch festgestellt werden kann, dass sich beispielsweise ein mobiles Endgerät in einer Ladeschale befindet und von einer externen Stromversorgung gespeist wird.

Analog zur Basisstation kann auch das mobile Endgerät eine Benutzereingabeeinheit IM aufweisen, die eine virtuelle Dauerempfang-Statusinformation RO in Abhängigkeit von einer jeweiligen Benutzereingabe festlegt. Auf diese Weise können auch nicht in einer Ladeschale abgelegte mobile Endgeräte unter dem Risiko einer Schnellentleerung jedoch zugunsten einer Funkstille betrieben werden.

Wiederum analog zur Basisstation kann auch das mobile Endgeräte eine Zeitgebereinheit TIM als Statusinformation-Bestimmungseinheit aufweisen, wodurch eine Dauerempfang-Statusinformation RO in Abhängigkeit von einer Tageszeit festgelegt werden kann.

In gleicher Weise wie die Basisstation kann auch das mobile Endgerät eine Anzeigeeinheit DM zum Anzeigen des Betriebszustandes der Basisstation bzw. des Telekommunikationssystems aufweisen, wobei beispielsweise eine Leuchtdiode, ein Piktogramm oder eine sonstige Anzeigevorrichtung verwendet wird.

Zur Realisierung einer alternativen Synchronisation zwischen der Basisstation B und den mobilen Endgeräten Mx mittels eines drahtgebundenen Synchronisationssignals kann auch das mobile Endgerät Mx eine Zusatz-Synchronisationseinheit DFM auf weisen, die beispielsweise unter Verwendung einer Netzfrequenz der zur Verfügung stehenden Netzversorgung eine Synchronisation im Ruhebetriebszustand ermöglicht, wodurch sowohl der Energiebedarf verringert als auch ein Verbindungsaufbau beschleunigt werden kann.

Ferner kann das mobile Endgerät eine Zusatz-Sendeeinheit TIM zur Realisierung einer Zusatz-Schnittstelle, wie beispielsweise einer IR- (Infrarot), einer BT- (Bluetooth), einer Powerline-Schnittstelle usw. aufweisen, um jeweils festgelegte bzw. gesetzte virtuelle Dauerempfang-Statusinformationen RO über diese Zusatz-Sendeeinheit an die Basisstation B zu übertragen.

Die Erfindung wurde vorstehend an Hand eines DECT-Telekommunikationssystems beschrieben. Sie ist jedoch nicht darauf beschränkt und umfasst in gleicher Weise alternative Telekommunikationssysteme wie z.B. WLAN, HYPERLAN, Bluetooth usw., die ein sogenanntes Funk-Synchronisationssignal zum Synchronisieren einer Basisstation mit ihren zugehörigen Endgeräten aufweisen.

Ferner wurden eine Vielzahl von Elementen gemäß der vorliegenden Beschreibung unmittelbar in das mobile Endgerät integriert. Insbesondere bei Verwendung von mobilen Endgeräten mit zugehörigen Ladeschalen können jedoch eine Vielzahl der Baueinheiten, wie beispielsweise eine Energieerfassungseinheit, eine Benutzereingabeeinheit, eine Zeitgebereinheit, eine Zusatz-Schnittstelle und eine Zusatz-Synchronisationseinheit, auch unmittelbar in der Ladeschale realisiert werden.

## Patentansprüche

1. Verfahren zur Verringerung einer Strahlung in einem Funk-Telekommunikationssystem, welches zumindest ein Funk-Synchronisationssignal (BB) zum Synchronisieren einer Basisstation (B) mit zumindest einem mobilen Endgerät (M1 bis M3) ausstrahlt, mit folgenden Aschritten:
a) Erfassen einer Anzahl von an der Basisstation (B) angemeldeten mobilen Endgeräten (S1);
b) Setzen einer Anzahl von virtuellen Dauerempfang-Statusinformationen (RO), die einen tatsächlichen oder scheinbaren Dauerempfangszustand der mobilen Endgeräte signalisieren (S2); und
c) Vergleichen der Anzahl von angemeldeten Endgeräten mit der Anzahl von virtuellen Dauerempfang-Statusinformationen (S3), wobei
die Basisstation in einen Ruhebetriebszustand geschaltet wird (S4), bei dem auch das Funk-Synchronisationssignal (BB) nicht gesendet wird, wenn im Vergleich eine gleiche Anzahl von virtuellen Dauerempfangs-Statusinformationen (53) und angemeldeten Endgeräten ermittelt wird, und
ansonsten die Basisstation in einem Normalbetriebszustand verbleibt (S5), bei dem zumindest das Funk-Synchronisationssignal (BB) gesendet wird.

2. Verfahren nach Patentanspruch 1, **dadurch gekennzeichnet, dass** in Schritt b) ein angemeldetes mobiles Endgerät seine zugehörige virtuelle Dauerempfang-Statusinformation (RO) setzt.

3. Verfahren nach Patentanspruch 2, **dadurch gekennzeichnet, dass** die virtuelle DauerempfangStatusinformation (RO) in Abhängigkeit von einer Energieversorgung des mobilen Endgerätes gesetzt wird.

4. Verfahren nach Patentanspruch 2 oder 3, **dadurch gekennzeichnet , dass** die virtuelle Dauerempfang-Statusinformation (RO) in Abhängigkeit von einer Benutzereingabe gesetzt wird.

5. Verfahren nach einem der Patentansprüche 2 bis 4, **dadurch gekennzeichet dass** ein tatsächlicher Zustand des mobilen Endgerätes in Abhängigkeit von der gesetzten virtuellen Dauerempfang-Statusinformation (RO) aktiviert wird.

6. Verfahren nach einem der Patentansprüche 1 bis 5, **dadurch gekennzeichnet, dass** in Schritt b) die Basisstation (B) eine virtuelle Dauerempfang-Statusinformation (RO) für ein mobiles Endgerät setzt.

7. Verfahren nach Patentanspruch 6, **dadurch gekennzeichnet, dass** die virtuelle Dauerempfang-Statusinformation (RO) in Abhängigkeit von einer Benutzereingabe gesetzt wird.

8. Verfahren nach einem der Patentansprüche 1 bis 7, **dadurch gekennzeichnet, dass** die virtuelle Dauerempfang-Statusinformation (RO) in Abhängigkeit von einer Zeitgebereinheit gesetzt wird.

9. Verfahren nach einem der Patentansprüche 1 bis 8, **dadurch gekennzeichnet**, däss in Schritt c) der Betriebszustand der Basisstation (B) an den mobilen Endgeräten und/oder an der Basisstation angezeigt wird.

10. Verfahren nach einem der Patentansprüche 1 bis 9, **dadurch gekennzeichnet, dass** in Schritt c) im Ruhebetriebszustand der Empfänger der Basisstation auf Dauerempfang geschaltet wird.

11. Verfahren nach einem der Patentansprüche 1 bis 10, **gekennzeichnet durch** den weiteren Schritt:
d) Aktivieren des Normalbetriebszustandes aus dem Ruhebetriebszustand, wenn die Basisstation (B) eine vermittlungsseitige und/oder eine endgeräteseitige Verbindungsanforderung erhält.

12. Verfahren nach Patentanspruch 11, **dadurch gekennzeichnet, dass** in Schritt d) nach dem Aktivieren des Normalbetriebszustandes das Funk-Synchronisationssignal (BB) auf der zuletzt verwendeten Frequenz gesendet wird.

13. Verfahren nach einem der Patentansprüche 1 bis 12, **dadurch gekennzeichnet, dass** im Ruhebetriebszustand eine Synchronisation der Basisstation mit dem zumindest einen Endgerät mittels eines drahtgebundenen Synchronisationssignals erfolgt.

14. Verfahren nach einem der Patentansprüche 1 bis 5 und 8 bis 13, **dadurch gekennzeichnet, dass** die Schritte a) und c) in der Basisstation und der Schritt b) in dem zumindest einen Endgerät durchgeführt werden, wobei die virtuellen Dauerempfang-Statusinformationen (RO) über die Funkschnittstelle des Telekommunikationssystems oder über eine Zusatz-Schnittstelle (BT, IR, Powerline) an die Basisstation (B) übertragen werden.

15. Basisstation zur Verringerung einer Strahlung in einem Funk-Telekommunikationsnetzwerk mit
einer Sendeeinheit (TB) zum Senden von zumindest einem Funk-Synchronisationssignal (BB) auf einer Funkschnittstelle; einer Empfangseinheit zum Empfangen von Daten auf der Funkschnittstelle; und
einer Steuereinheit (CB) zum Steuern der Sende- und Empfangseinheit, **gekennzeichnet durch**
eine Speichereinheit (MB) zum Speichern einer Anzahl von an der Basisstation (B) angemeldeten mobilen Endgeräten (M1 bis M3) und einer Anzahl von virtuellen Dauerempfang-Statusinformationen (RO), die dazu eingerichtet sind, einen tatsächlichen oder scheinbaren Dauerempfangszustand der mobilen Endgeräte zu signalisieren, wobei die Steuereinheit (CB) dazu eingerichtet ist, die Basisstation (B) in einen Ruhebetriebszustand zu steuern, in dem auch das Funk-Synchronisationssignal (BB) nicht gesendet wird, wenn gemäß einer Auswertung der Speichereinheit (MB) **durch** die Steuereinheit (CB) die Anzahl der angemeldeten Endgeräte gleich der Anzahl der virtuellen Dauerempfang-Statusinformationen ist.

16. Basisstation nach Patentanspruch 15, **dadurch gekennzeichnet, dass** die Empfangseinheit (RB) dazu eingerichtet ist, die von den mobilen Endgeräten (M1 bis M3) gesetzte, virtuelle Dauerempfang-Statusinformation (RO) zu empfangen.

17. Basisstation nach Patentanspruch 15 oder 16, **gekennzeichnet durch** eine Zusatz-Empfangseinheit (R1B), die dazu eingerichtet ist, die von den mobilen Endgeräten (M1) gesetzte, virtuelle Dauerempfang-Statusinformation (RO) zu empfangen.

18. Basisstation nach einem der Patentansprüche 15 bis 17, **gekennzeichnet durch** eine Benutzer-Eingabeeinheit (IB), die dazu eingerichtet ist, die virtuelle Dauerempfang-Statusinformation von einem Benutzer abhängig oder unabhängig von einem tatsächlichen Zustand des mobilen Endgerätes einzugeben.

19. Basisstation nach einem der Patentansprüche 15 bis 18, **gekennzeichnet durch** eine Zeitgebereinheit (TI), die dazu eingerichtet ist, eine vorgegebene virtuelle Dauerempfang-Statusinformation in Abhängigkeit von einer Tageszeit zu setzen.

20. Basisstation nach einem der Patentansprüche 15 bis 19, **gekennzeichnet durch** eine Anzeigeeinheit (DB) zum Anzeigen des Betriebszustandes der Basisstation.

21. Basisstation nach einem der Patentansprüche 15 bis 20, **dadurch gekennzeichnet, dass** die Steuereinheit (CB) dazu eingerichtet ist, die Empfangseinheit (RB) im Ruhebetriebszustand auf Dauerempfang zu schalten.

22. Basisstation nach einem der Patentansprüche 15 bis 21, **dadurch gekennzeichnet, dass** die Steuereinheit (CB) dazu eingerichtet ist, die Basisstation in einen Normalbetriebszustand zu schalten, in dem zumindest das Funk-Synchronisationssignal (BB) gesendet wird, wenn vermittlungsseitig und/oder endgeräteseitig eine Verbindungsanforderung vorliegt.

23. Basisstation nach einem der Patentansprüche 15 bis 22, **gekennzeichnet durch** eine Zusatz-Synchronisationseinheit (R1B), die dazu eingerichtet ist, dass eine Synchronisation der Basisstation (B) mit der Vielzahl von mobilen Endgeräten (M1 bis M3) mittels eines drahtgebundenen Synchronisationssignals erfolgt.

24. Mobiles Endgerät zur Verringerung einer Strahlung in einem Funk-Telekommunikationsnetzwerk mit
einer Sendeeinheit (TM) zum Senden von Daten auf einer Funkschnittstelle;
einer Empfangseinheit (RM) zum Empfangen von Daten auf der Funkschnittstelle;
einer Steuereinheit (CM) zum Steuern der Sende- und Empfangseinheit, **gekennzeichnet durch**
eine Statusinformation-Bestimmungseinheit (TIM, IM, DLM), die dazu eingerichtet ist, eine virtuelle Dauerempfang-Statusinformation (RO) zu setzen, wobei die Steuereinheit (CM) bei Vorliegen einer virtuellen Dauerempfang-Statusinformation (RO) diese über die Sendeeinheit (TM) sendet und die Empfangseinheit (RM) auf tatsächlichen Dauerempfang oder einen Bereitschaftszustand schaltet.

25. Mobiles Endgerät nach Patentanspruch 24, **dadurch gekennzeichnet, dass** die Statusinformation-Bestimmungseinheit eine Energieversorgungs-Erfassungseinheit (DLM) aufweist, die dazu eingerichtet ist, eine virtuelle Dauerempfang-Statusinformation (RO) zu setzen, wenn die Energieversorgung des mobilen Endgerätes über eine externe Versorgung erfolgt.

26. Mobiles Endgerät nach Patentanspruch 24 oder 25, **dadurch gekennzeichnet, dass** die Statusinformation-Bestimmungseinheit eine Benutzereingabeeinheit (IM) aufweist, die dazu eingerichtet ist, die virtuelle Dauerempfang-Statusinformation (RO) in Abhängigkeit von einer Benutzereingabe festzulegen.

27. Mobiles Endgerät nach einem der Patentansprüche 24 bis 26, **dadurch gekennzeichnet, dass** die Statusinformation-Bestimmungseinheit eine Zeitgebereinheit (TIM) aufweist, die dazu eingerichtet ist, die virtuelle Dauerempfang-Statusinformation (RO) in Abhängigkeit von einer Tageszeit festzulegen.

28. Mobiles Endgerät nach einem der Patentansprüche 24 bis 27, **gekennzeichnet durch** eine Anzeigeeinheit (DM) zum Anzeigen des Betriebszustandes einer Basisstation (B).

29. Mobiles Endgerät nach einem der Patentansprüche 24 bis-28, **gekennzeichnet durch** eine Zusatz-Synchronisationseinheit (DFM), die dazu eingerichtet ist, dass eine Synchronisation des mobilen Endgerätes mit der Basisstation (B) mittels eines drahtgebundenen Synchronisationssignals erfolgt.

30. Mobiles Endgerät nach einem der Patentansprüche 24 bis 29, **gekennzeichnet durch** eine Zusatz-Sendeeinheit (T1M), die dazu eingerichtet ist, die gesetzte virtuelle Dauerempfang-Statusinformation (RO) über die Zusatz-Sendeeinheit an die Basisstation (B) zu senden.

## Claims

1. Method for reducing radiation in a radio telecommunication system which emits at least one radio synchronization signal (BB) for the purpose of synchronizing a base station (B) to at least one mobile terminal (M1 to M3), having the following steps:
a) a number of mobile terminals (S1) registered on the base station (B) is detected;
b) a number of virtual continuous reception status information items (RO), which signal an actual or apparent continuous reception state for the mobile terminals (S2), is set; and
c) the number of registered terminals is compared with the number of virtual continuous reception status information items (S3),
wherein
the base station is switched to a quiescent operating state (S4), in which the radio synchronization signal (BB) is also not sent if the comparison involves ascertainment of an identical number of virtual continuous reception status information items (S3) and registered terminals, and
otherwise the base station remains in a normal operating state (S5), in which at least the radio synchronization signal (BB) is sent.

2. Method according to Patent Claim 1, **characterized in that** in step b) a registered mobile terminal sets its associated virtual continuous reception status information item (RO).

3. Method according to Patent Claim 2, **characterized in that** the virtual continuous reception status information item (RO) is set on the basis of a power supply for the mobile terminal.

4. Method according to Patent Claim 2 or 3, **characterized in that** the virtual continuous reception status information item (RO) is set on the basis of a user input.

5. Method according to one of Patent Claims 2 to 4, **characterized in that** an actual state of the mobile terminal is activated on the basis of the set virtual continuous reception status information item (RO).

6. Method according to one of Patent Claims 1 to 5, **characterized in that** in step b) the base station (B) sets a virtual continuous reception status information item (RO) for a mobile terminal.

7. Method according to Patent Claim 6, **characterized in that** the virtual continuous reception status information item (RO) is set on the basis of a user input.

8. Method according to one of Patent Claims 1 to 7, **characterized in that** the virtual continuous reception status information item (RO) is set on the basis of a timer unit.

9. Method according to one of Patent Claims 1 to 8, **characterized in that** in step c) the operating state of the base station (B) is indicated on the mobile terminals and/or on the base station.

10. Method according to one of Patent Claims 1 to 9, **characterized in that** in step c) in the quiescent operating state the receiver of the base station is switched to continuous reception.

11. Method according to one of Patent Claims 1 to 10, **characterized by** the following further step:
d) the normal operating state is activated from the quiescent operating state when the base station (B) receives an exchange-end and/or a terminal-end connection request.

12. Method according to Patent Claim 11, **characterized in that** in step d) the activation of the normal operating state is followed by the radio synchronization signal (BB) being sent on the most recently used frequency.

13. Method according to one of Patent Claims 1 to 12, **characterized in that** in the quiescent operating state the base station is synchronized to the at least one terminal by means of a wired synchronization signal.

14. Method according to one of Patent Claims 1 to 5 and 8 to 13, **characterized in that** steps a) and c) are performed in the base station and step b) is performed in the at least one terminal, wherein the virtual continuous reception status information items (RO) are transmitted to the base station (B) via the radio interface of the telecommunication system or via a supplementary interface (BT, IR, Powerline).

15. Base station for reducing radiation in a radio telecommunication network having
a transmission unit (TB) for sending at least one radio synchronization signal (BB) on a radio interface;
a reception unit for receiving data on the radio interface; and
a control unit (CB) for controlling the transmission and reception units, **characterized by**
a memory unit (MB) for storing a number of mobile terminals (M1 to M3) which are registered on the base station (B) and a number of virtual continuous reception status information items (RO) which are set up to signal an actual or apparent continuous reception state for the mobile terminals, wherein the control unit (CB) is set up to put the base station (B) into a quiescent operating state, in which the radio synchronization signal (BB) is also not sent, when, on the basis of an evaluation of the memory unit (MB) by the control unit (CB), the number of registered terminals is the same as the number of virtual continuous reception status information items.

16. Base station according to Patent Claim 15, **characterized in that** the reception unit (RB) is set up to receive the virtual continuous reception status information item (RO) which is set by the mobile terminals (M1 to M3).

17. Base station according to Patent Claim 15 or 16, **characterized by** a supplementary reception unit (R1B) which is set up to receive the virtual continuous reception status information item (RO) which is set by the mobile terminals (M1).

18. Base station according to one of Patent Claims 15 to 17, **characterized by** a user input unit (IB) which is set up to input the virtual continuous reception status information item from a user on the basis of or irrespective of an actual state of the mobile terminal.

19. Base station according to one of Patent Claims 15 to 18, **characterized by** a timer unit (TI) which is set up to set a prescribed virtual continuous reception status information item on the basis of a time of day.

20. Base station according to one of Patent Claims 15 to 19, **characterized by** an indicator unit (DB) for indicating the operating state of the base station.

21. Base station according to one of Patent Claims 15 to 20, **characterized in that** the control unit (CB) is set up to switch the reception unit (RB) to continuous reception in the quiescent operating state.

22. Base station according to one of Patent Claims 15 to 21, **characterized in that** the control unit (CB) is set up to switch the base station to a normal operating state, in which at least the radio synchronization signal (BB) is sent when there is a connection request at the exchange end and/or at the terminal end.

23. Base station according to one of Patent Claims 15 to 22, **characterized by** a supplementary synchronization unit (R1B) which is set up to synchronize the base station (B) to the multiplicity of mobile terminals (M1 to M3) by means of a wired synchronization signal.

24. Mobile terminal for reducing radiation in a radio telecommunication network having
a transmitter unit (TM) for sending data on a radio interface;
a reception unit (RM) for receiving data on the radio interface;
a control unit (CM) for controlling the transmission and reception units, **characterized by**
a status information determination unit (TIM, IM, DLM) which is set up to set a virtual continuous reception status information item (RO), wherein the control unit (CM) uses the transmission unit (TM) to send a virtual continuous reception status information item (RO) that is present and switches the reception unit (RM) to actual continuous reception or a standby state.

25. Mobile terminal according to Patent Claim 24, **characterized in that** the status information determination unit has a power supply detection unit (DLM) which is set up to set a virtual continuous reception status information item (RO) when the power supply for the mobile terminal is effected using an external supply.

26. Mobile terminal according to Patent Claim 24 or 25, **characterized in that** the status information determination unit has a user input unit (IM) which is set up to stipulate the virtual continuous reception status information item (RO) on the basis of a user input.

27. Mobile terminal according to one of Patent Claims 24 to 26, **characterized in that** the status information determination unit has a timer unit (TIM) which is set up to stipulate the virtual continuous reception status information item (RO) on the basis of a time of day.

28. Mobile terminal according to one of Patent Claims 24 to 27, **characterized by** an indicator unit (DM) for indicating the operating state of a base station (B).

29. Mobile terminal according to one of Patent Claims 24 to 28, **characterized by** a supplementary synchronization unit (DFM) which is set up to synchronize the mobile terminal to the base station (B) by means of a wired synchronization signal.

30. Mobile terminal according to one of Patent Claims 24 to 29, **characterized by** a supplementary transmission unit (TIM) which is set up to send the set virtual continuous reception status information item (RO) to the base station (B) using the supplementary transmission unit.

## Revendications

1. Procédé de réduction d'un rayonnement dans un système de télécommunication radio qui émet au moins un signal de synchronisation radio (BB) pour synchroniser une station de base (B) avec au moins un terminal mobile (M1 à M3), comportant les étapes suivantes :
a) détection (S1) d'un nombre de terminaux mobiles inscrits sur la station de base (B) ;
b) affectation (S2) d'un nombre d'informations virtuelles d'état de réception permanente (RO) qui signalent un état de réception permanente réel ou apparent des terminaux mobiles ; et
c) comparaison (S3) du nombre de terminaux inscrits au nombre d'informations virtuelles d'état de réception permanente,
la station de base étant commutée (S4) dans un état de fonctionnement dit de repos dans lequel le signal de synchronisation radio (BB) n'est pas émis lorsque la comparaison (S3) donne un nombre identique d'informations virtuelles d'état de réception permanente et de terminaux inscrits,
la station de base restant (S5) sinon dans un état de fonctionnement dit normal dans lequel au moins le signal de synchronisation radio (BB) est émis.

2. Procédé selon la revendication 1, **caractérisé en ce que**, à l'étape b), un terminal mobile inscrit affecte son information virtuelle d'état de réception permanente (RO) associée.

3. Procédé selon la revendication 2, **caractérisé en ce que** l'information virtuelle d'état de réception permanente (RO) est affectée en fonction d'une alimentation en énergie du terminal mobile.

4. Procédé selon la revendication 2 ou 3, **caractérisé en ce que** l'information virtuelle d'état de réception permanente (RO) est affectée en fonction d'une entrée d'utilisateur.

5. Procédé selon l'une des revendications 2 à 4, **caractérisé en ce qu'**un état réel du terminal mobile est activé en fonction de l'information virtuelle d'état de réception permanente (RO) affectée.

6. Procédé selon l'une des revendications 1 à 5, **caractérisé en ce que**, à l'étape b), la station de base (B) affecte une information virtuelle d'état de réception permanente (RO) pour un terminal mobile.

7. Procédé selon la revendication 6, **caractérisé en ce que** l'information virtuelle d'état de réception permanente (RO) est affectée en fonction d'une entrée d'utilisateur.

8. Procédé selon l'une des revendications 1 à 7, **caractérisé en ce que** l'information virtuelle d'état de réception permanente (RO) est affectée en fonction d'une horloge.

9. Procédé selon l'une des revendications 1 à 8, **caractérisé en ce que**, à l'étape c), l'état de fonctionnement de la station de base (B) est affiché sur les terminaux mobiles et/ou sur la station de base.

10. Procédé selon l'une des revendications 1 à 9, **caractérisé en ce que**, à l'étape c), dans l'état de fonctionnement de repos, le récepteur de la station de base est commuté sur réception permanente.

11. Procédé selon l'une des revendications 1 à 10, **caractérisé par** l'étape suivante :
d) activation de l'état de fonctionnement normal à partir de l'état de fonctionnement de repos lorsque la station de base (B) reçoit une demande de liaison du côté du circuit et/ou une demande de liaison du côté du terminal.

12. Procédé selon la revendication 11, **caractérisé en ce que**, à l'étape d), après l'activation de l'état de fonctionnement normal, le signal de synchronisation radio (BB) est émis sur la dernière fréquence utilisée.

13. Procédé selon l'une des revendications 1 à 12, **caractérisé en ce que**, dans l'état de fonctionnement de repos, une synchronisation de la station de base avec le ou les terminaux s'effectue au moyen d'un signal de synchronisation filaire.

14. Procédé selon l'une des revendications 1 à 5 et 8 à 13, **caractérisé en ce que** les étapes a) et c) sont effectuées dans la station de base et l'étape b) dans le ou les terminaux, les informations virtuelles d'état de réception permanente (RO) étant transmises à la station de base (B) par l'intermédiaire de l'interface radio du système de télécommunication ou par l'intermédiaire d'une interface supplémentaire (BT, IR, Powerline).

15. Station de base pour la réduction d'un rayonnement dans un réseau de télécommunication radio avec
- une unité d'émission (TB) pour émettre au moins un signal de synchronisation radio (BB) sur une interface radio ;
- une unité de réception pour recevoir des données sur l'interface radio ; et
- une unité de commande (CB) pour commander les unités d'émission et de réception,
**caractérisée par** une unité de mémorisation (MB) pour mémoriser un nombre de terminaux mobiles (M1 à M3) inscrits sur la station de base (B) et un nombre d'informations virtuelles d'état de réception permanente (RO) qui sont établies pour signaler un état de réception permanente réel ou apparent des terminaux mobiles, l'unité de commande (CB) étant conçue pour commander la station de base (B) dans un état de fonctionnement de repos dans lequel le signal de synchronisation radio (BB) n'est pas émis lorsque, selon une évaluation de l'unité de mémorisation (MB) par l'unité de commande (CB), le nombre des terminaux inscrits est égal au nombre des informations virtuelles d'état de réception permanente.

16. Station de base selon la revendication 15, **caractérisée en ce que** l'unité de réception (RB) est conçue pour recevoir l'information virtuelle d'état de réception permanente (RO) affectée par les terminaux mobiles (M1 à M3).

17. Station de base selon la revendication 15 ou 16, **caractérisée par** une unité de réception supplémentaire (R1B) qui est conçue pour recevoir l'information virtuelle d'état de réception permanente (RO) affectée par les terminaux mobiles (M1).

18. Station de base selon l'une des revendications 15 à 17, **caractérisée par** une unité d'entrée d'utilisateur (IB) qui est conçue pour qu'un utilisateur puisse entrer l'information virtuelle d'état de réception permanente en fonction ou indépendamment d'un état réel du terminal mobile.

19. Station de base selon l'une des revendications 15 à 18, **caractérisée par** une horloge (TI) qui est conçue pour affecter en fonction de l'heure du jour une information virtuelle d'état de réception permanente prédéterminée.

20. Station de base selon l'une des revendications 15 à 19, **caractérisée par** une unité d'affichage (DB) pour afficher l'état de fonctionnement de la station de base.

21. Station de base selon l'une des revendications 15 à 20, **caractérisée en ce que** l'unité de commande (CB) est conçue pour commuter l'unité de réception (RB) dans l'état de fonctionnement de repos sur la réception permanente.

22. Station de base selon l'une des revendications 15 à 21, **caractérisée en ce que** l'unité de commande (CB) est conçue pour commuter la station de base dans un état de fonctionnement normal dans lequel au moins le signal de synchronisation radio (BB) est émis lorsque se présente une demande de liaison du côté du circuit et/ou du côté du terminal.

23. Station de base selon l'une des revendications 15 à 22, **caractérisée par** une unité de synchronisation supplémentaire (R1B) qui est conçue de telle sorte qu'une synchronisation de la station de base (B) avec les terminaux mobiles (M1 à M3) s'effectue au moyen d'un signal de synchronisation filaire.

24. Terminal mobile pour la réduction d'un rayonnement dans un réseau de télécommunication radio avec
- une unité d'émission (TM) pour émettre des données sur une interface radio ;
- une unité de réception (RM) pour recevoir des données sur l'interface radio ; et
- une unité de commande (CM) pour commander les unités d'émission et de réception ;
**caractérisé par** une unité de détermination d'information d'état (TIM, IM, DLM) qui est conçue pour affecter une information virtuelle d'état de réception permanente (RO), l'unité de commande (CM) en présence d'une information virtuelle d'état de réception permanente (RO) émettant celle-ci par l'intermédiaire de l'unité d'émission (TM) et l'unité de réception (RM) commutant sur une réception permanente réelle ou sur un état de disponibilité.

25. Terminal mobile selon la revendication 24, **caractérisé en ce que** l'unité de détermination d'information d'état comporte une unité de détection d'alimentation en énergie (DLM) qui est conçue pour affecter une information virtuelle d'état de réception permanente (RO) lorsque l'alimentation en énergie du terminal mobile s'effectue par l'intermédiaire d'une alimentation externe.

26. Terminal mobile selon la revendication 24 ou 25, **caractérisé en ce que** l'unité de détermination d'information d'état comporte une unité d'entrée d'utilisateur (IM) qui est conçue pour fixer l'information virtuelle d'état de réception permanente (RO) en fonction d'une entrée d'utilisateur.

27. Terminal mobile selon l'une des revendications 24 à 26, **caractérisé en ce que** l'unité de détermination d'information d'état comporte une horloge (TIM) qui est conçue pour fixer l'information virtuelle d'état de réception permanente (RO) en fonction de l'heure du jour.

28. Terminal mobile selon l'une des revendications 24 à 27, **caractérisé par** une unité d'affichage (DM) pour afficher l'état de fonctionnement d'une station de base (B).

29. Terminal mobile selon l'une des revendications 24 à 28, **caractérisé par** une unité de synchronisation supplémentaire (DFM) qui est conçue de telle sorte qu'une synchronisation du terminal mobile avec la station de base (B) s'effectue au moyen d'un signal de synchronisation filaire.

30. Terminal mobile selon l'une des revendications 24 à 29, **caractérisé par** une unité d'émission supplémentaire (TIM) qui est conçue pour émettre vers la station de base (B), par l'intermédiaire de l'unité d'émission supplémentaire, l'information virtuelle d'état de réception permanente (RO) affectée.
